# EUROPEAN PATENT APPLICATION

(11) **EP 4 345 559 A1**
(43) Date of publication of application: **03.04.2024**
(21) Application number: 22306425.4
(22) Date of filing: 27.09.2022
(51) Int. Cl.: G05B 19/418

(54) **PROCESS IMAGE SHARING ACROSS MULTIPLE PROGRAMMABLE AUTOMATION CONTROLLERS**

(71) Applicant: Schneider Electric Industries SAS, 92500 Rueil-Malmaison (FR)
(72) Inventor: BRÜCK, Antoine, 06200 Nice (FR)
(74) Representative: Schneider Electric

(57) **Abstract**

For sharing process data from a first controller (CT1) to a least a second controller (CT2), the first controller (CT1) and the second controller (CT2) including respectively a first runtime environment (RE1) and a second runtime environment (RE2) to execute at least a distributed automation application (Daa) and including respectively a first process data manager (PDM1) and a second process data manager (PDM2) to manage respectively a first process image (PI1) and a second process image (PI2), the first process data manager and the second process data manager being linked respectively to a first set of communication devices (CD1) and to a second set of communication devices (CD2) via a first communication line (CL1) and being linked between them via a second communication line (CL2), a system comprises:
the first controller (CT1) retrieving (S2) process data from the distributed automation application (Daa) or from a communication device of the first set of communication devices (CD1),
the first controller (CT1) updating (S3) the first process image (PI1) with the retrieved process data,
the first controller (CT1) sending (S4) the process data on the second communication line (CL2),
the second controller (CT2) receiving (S5) the process data sent on the second communication line (CL2) and updating the second process image (PI2) with the received process data.

## Description

### FIELD OF INVENTION

The present disclosure relates generally to programmable automation controllers and, more particularly, to the processing of Input Output data exchanged between a set of programmable automation controllers.

### BACKGROUND

Industrial automation/control systems are employed for controlling operation of a wide variety of systems, including processes, machines, etc., and are typically adaptable to different control applications through configuration and interconnection of multiple control system components or devices, such as control modules, Input/Output (I/O) modules, I/O devices, etc. Existing industrial control systems typically include a processor running or executing a control program to interact with an I/O system (e.g., typically one or more I/O modules or devices) to receive system information in the form of analog and/or digital inputs from field sensors and to provide outputs (analog and/or digital) to one or more actuators. Industrial control systems are increasingly being interconnected with management information and other systems in a manufacturing facility, and may be operatively connected to any number of communications networks to facilitate various business management functions such as inventory control, accounting, manufacturing control, etc., in addition to the process/machine control functionality.

A controller is a specialized computer control system configured to execute software which continuously gathers data on the state of input devices to control the state of output devices. Examples of controllers include programmable logic controllers (PLC) or programmable automation controllers (PAC), motion controllers, CNC, Smart I/O and drive controllers. A controller typically includes three major components: a processor (which may include volatile memory), volatile memory comprising an application program, and one or more input/output (I/O) ports for connecting to other devices in the automation system.

A process image is the heart of a running controller. It provides a snapshot of all inputs, outputs, and internal variables that the controller has access to at any given point in time, and the controller source code. The process image is always bound to a specific controller. In controllers, the process image is a data structure that is visible only to a runtime system and it is used to execute cyclic or event-based controller programs.

In a distributed automation system (typically programmed with IEC61499 standard), an application can be executed on several programmable automation controllers. When an IO module is deployed on a fieldbus, the Input Output data is usually available only on the PAC managing this fieldbus. The build-time software used to deploy the application will enable to map statically the application parts consuming the Input Output data coming from the fieldbus.

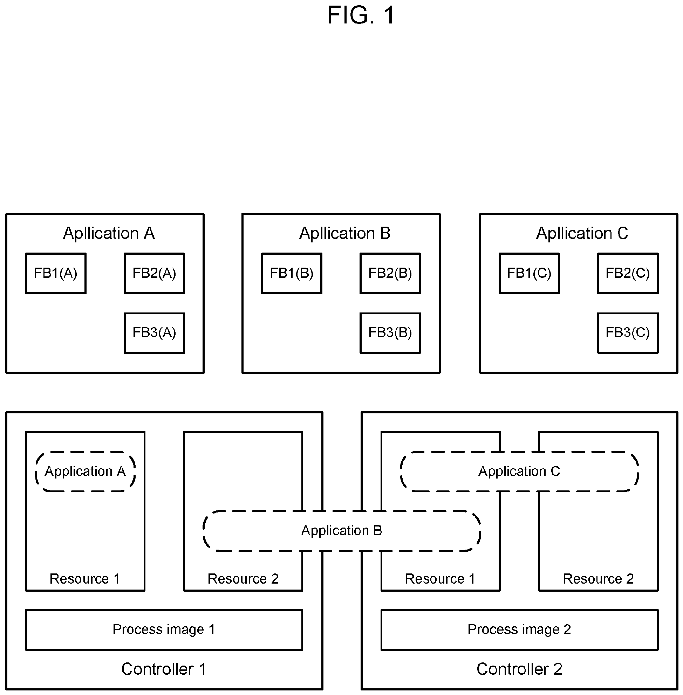

With reference to FIG. 1, there is illustrated an example with the IEC61499 programming model, wherein application A, application B and application C are distributed among controller 1 and controller 2. IEC 61499 has been introduced aimed at modeling control system applications which can be distributed over several controllers. A particular type of programming language, Functional Block Diagram, is a graphical language using function blocks to model and program an automation system. IEC 61499 allows implementation of a control program, like application B, over multiple controllers.

Each part of an application (e.g. a function block) is using a computing resource of a controller on which the application is distributed. Furthermore, each part of an application is using a computing resource of a controller on which the application is distributed. Here, the process image 1 and the process image 2 are isolated and not shared between the controller 1 and controller 2.

For example, all function blocks FB1(A), FB2(A) and FB3(A) of application A are using computing resource 1-1 of controller 1 and process image 1 of controller 1. For application B, function block FB1(B) is using computing resource 1-2 of controller 1 and process image 1 of controller 1 and function blocks FB2(B) and FB3(B) are using computing resource 2-1 of controller 2 and process image 2 of controller 2. For application C, function blocks FB1(C) and FB(C) are using computing resource 2-1 of controller 2 and process image 2 of controller 2 (as for function blocks FB2(B) and FB3(B) of application B and function block FB3(C) is using computing resource 2-2 of controller 2 and process image 2 of controller 2.

In this example, the application B requires specific code to exchange the IO process image between controller 1 and controller 2. If the need comes to distribute function blocks from application B on another controller (eg: controller 3 not represented), the logic of the application B will have to be modified in order to exchange the IO process image with controller 3.

There is therefore a need for enabling an efficient management of IO process image among different industrial controllers in a distributed automation system.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, there is provided a method for sharing process data from a first controller to a least a second controller, the first controller and the second controller including respectively a first runtime environment and a second runtime environment to execute at least a distributed automation application and including respectively a first process data manager and a second process data manager to manage respectively a first process image and a second process image, the first process data manager and the second process data manager being linked respectively to a first set of communication devices and to a second set of communication devices via a first communication line and being linked between them via a second communication line, the method comprising the following steps:
the first controller retrieving process data from the distributed automation application or from a communication device of the first set of communication devices,
the first controller updating the first process image with the retrieved process data,
the first controller sending the process data on the second communication line,
the second controller receiving the process data sent on the second communication line and updating the second process image with the received process data.

Advantageously, the industrial system allows to break isolation between process interfaces in order to enable any parts of the application to access any part of the IO process image independently on where it is mapped.

In an embodiment, the second communication line provides deterministic data paths with high reliability and bounds on latency.

In an embodiment, the process data are input data from a communication device of the first set of communication devices and are read by the first process data manager from the first communication line.

In an embodiment, the process data are output data for a communication device of the first set of communication devices and are written by the first process data manager from the distributed automation application.

In an embodiment, the process data are published by a publisher service of the first process data manager on the second communication line.

In an embodiment, the process data are received through a subscriber service of the second process data manager.

In an embodiment, the first communication line and the second communication line are merged.

In another implementation, there is provided an industrial system comprising a first controller and a least a second controller for sharing process data from the first controller to a least the second controller, the first controller and the second controller including respectively a first runtime environment and a second runtime environment to execute at least a distributed automation application and including respectively a first process data manager and a second process data manager to manage respectively a first process image and a second process image, the first process data manager and the second process data manager being linked respectively to a first set of communication devices and to a second set of communication devices via a first communication line and being linked between them via a second communication line, wherein:
the first controller is configured to retrieve process data from the distributed automation application or from a communication device of the first set of communication devices,
the first controller is configured to update the first process image with the retrieved process data,
the first controller is configured to send the process data on the second communication line
the second controller is configured to receive the process data sent on the second communication line and to update the second process image with the received process data.

In another implementation there is provided a computer-readable medium having embodied thereon a computer program for sharing process data from a first controller to a least a second controller. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 shows a schematic block diagram of a known industrial communication system having deployed distributed automation applications on a first controller and a second controller;
FIG. 2 shows a schematic block diagram of an industrial communication system for sharing process data from a first controller to a least a second controller according to one embodiment;
FIG. 3 is a flow diagram of a method for sharing process data from a first controller to a least a second controller according to one embodiment.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

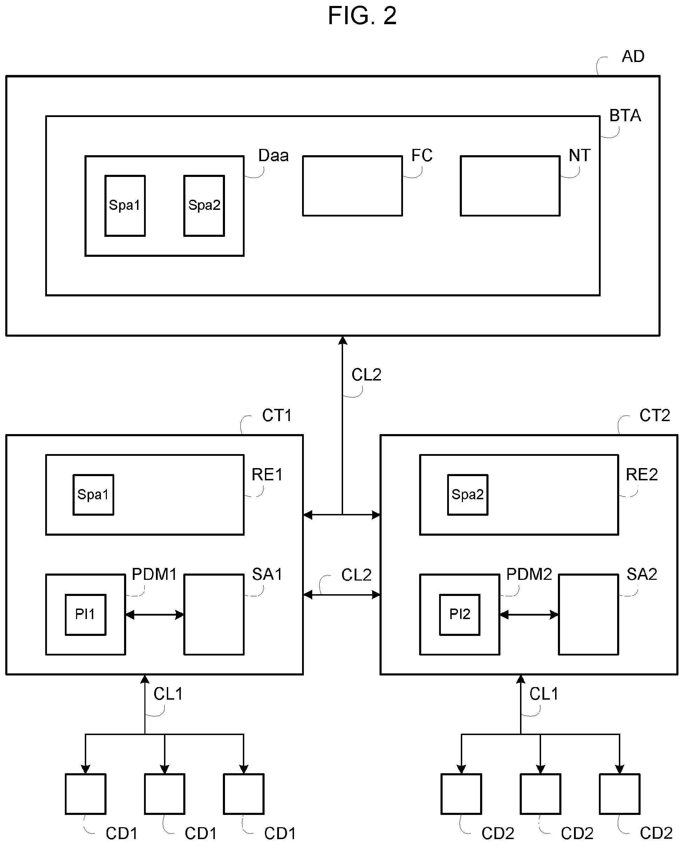

Referring to FIG. 2, an industrial communication system comprises a set of controllers, including at least a first controller CT1 and a second controller CT2 (only two controllers are represented for illustrative example), a first set of communication devices CD1 and a second set of communication devices CD2, an application device AD, a first communication line CL1 and a second communication line CL2. The first communication line CL1 can be a multipoint communication line linking each controller CT1, CT2 and the respective set of communication devices CD1, CD2. The second communication line CL2 can be a multipoint communication line linking the controllers between them or linking the controllers and the application device AD. If the second communication line CL2 is only linking the controllers between them, another communication line can be provided to link the controllers with the application device AD. In one embodiment, the first communication line CL1 and the second communication line CL2 can be merged.

A controller is able to manage communication with a set of communication devices, via the first communication line CL1. In one example, the controller communicates with remote I/O modules via an Ethernet fieldbus (like Modbus). In another example, the controller communicates with local I/O modules through backplane via a multipoint low voltage differential signaling (MLVDS) bus. The controllers CT1, CT2 can communicate between them and with the application device AD via the second communication line CL2, like Ethernet and CAN (Controller Area Network) bus.

The controller can be a programmable Logic Controller PLC, a Programmable Automation Controller PAC, or other type of processing device, which may include virtual devices like a Virtual Machine or Containers.

A communication device can include Analog to Digital Converter (ADC) and Digital to Analog Converter (DAC) for connecting to sensors and the real world, communications modules, digital inputs and outputs, relays, and more. A communication device may also be a gateway or a servo drive. A communication module communicates with a controller through the first communication line CL1 with adapted packet formats.

The application device AD can be any processing device, like a computer or a server and comprises a build-time application BTA like an "Engineering tool" enabling to create, map, compile and deploy a distributed automation application Daa to different controllers, like first controller CT1 and second controller CT2. The distributed automation application Daa comprises sub-parts of application Spa1, Spa2, like function blocks for the IEC61499 for example, that are deployed and executed by said different controllers.

The build-time application BTA enables the configuration, mapping and deployment of a hardware configuration for an IO system relying on one or several fieldbus protocols (e.g. EtherNet/IP, Modbus/TCP, Profinet, EtherCAT, OPCUA FX...) via a fieldbus configurator FC for the first communication line CL1.

The fieldbus configurator FC provides an IO sharing configurator that defines the capacity for an end-user to select which part of a process image shall be available for which controller for said a distributed automation application Daa. A process image can be seen as the storage buffer between the linked communication device and the user program and the distributed automation application Daa for a controller.

The IO sharing configurator defines also which controller is the owner of a fieldbus scanner. A fieldbus scanner is a functionality of a controller to read and write data for the communication device.

The build-time application provides also a network tool NT to enable communication between the different controllers of the distributed automation application via the second communication line CL2 consistently with the needs of the distributed automation application in terms of jitter. The network tool NT is also able to configure the communication between the controllers and the communication devices via the first communication line CL1.

In one embodiment, the second communication line CL2 provides deterministic data paths with high reliability and bounds on latency.

In one embodiment, the communication on the second communication line CL2 is TSN (Time Sensitive Network) compliant. TSN is a technology that is focused on real-time, and was developed to provide a way to make sure information can travel from point A to point B in a fixed and predictable amount of time. The network tool NT further includes an additional module, the IO sharing TSN slots configurator, that is able to create and dimension all the TSN slots to be used between the controllers to share the process images in a real-time manner.

The first controller CT1, respectively the second controller CT2, includes a first runtime environment RE1, respectively a second runtime environment RE2, to execute the distributed automation application Daa, i.e. at least sub-parts of the distributed automation application Spa1, Spa2, and includes a first process data manager PDM1, respectively a second process data manager PDM2.

The first process data manager PDM1 is able to communicate with the first set of communication devices CD1 via the first communication line CL1, as well as the second process data manager PDM2 is able to communicate with the second set of communication devices CD2 via the first communication line CL1.

The first runtime environment RE1 can communicate with the second runtime environment RE2 via the second communication line CL2.

The first process data manager PDM1, respectively the second process data manager PDM2, is able to store and modify data of a first process image PI1, respectively a second process image PI2, and implements a first synchronization agent SA1, respectively a second synchronization agent SA2, to exchange process data with other controllers in a consistent way. The first process data manager PDM1, respectively the second process data manager PDM2, interacts with the first runtime environment RE1, respectively the second runtime environment RE2 executing the distributed automation application in order to feed the distributed automation application Daa with the process data. A process image can be seen as a memory area where process data of communication devices can be copied to/from, for distributed automation application

Each process data manager PDM1, PDM2 is able to manage one or multiple protocols, e.g. using a "multi-protocol middleware", on the second communication line CL2.

Each synchronization agent SA1, SA2 is in charge of ensuring that the corresponding process data manager PDM1, PDM2 publishes/subscribes to the configured process data available in the other controllers.

The process data manager of a controller is able to scan the communication devices linked to said controller, periodically or based on events. The process data manager monitors if output data are provided by the distributed automation application Daa from the runtime environment or if input data are provided by a communication device from the fieldbus, i.e. the first communication line CL1.

The process data manager is thus able to update its process image, i.e. a local copy of the process data, from the provided input data or the provided output data. Once process data have been updated or once the provision of process data has been detected, the process data manager triggers the corresponding synchronization agent and notifies this latter of the update.

The synchronization agent is able to prepare the process data to be published on the second communication line CL2. In one embodiment with a TSN environment, the synchronization agent sends the process data on the second communication line CL2 at the next TSN slot.

The process data manager of another controller receives the process data sent on the second communication line CL2 and is then able to update its process image of said another controller with the received process data.

Thus, the synchronization agent SA1, SA2 of each controller CT1, CT2 hosts a subscriber service and a publisher service. In one embodiment, the process data manager further hosts a OPC UA stack which implements the OPCUA pub/sub protocol providing a publish/subscribe mechanism, an optimized payload and headers with layer 2 and compatible with TSN shapers..

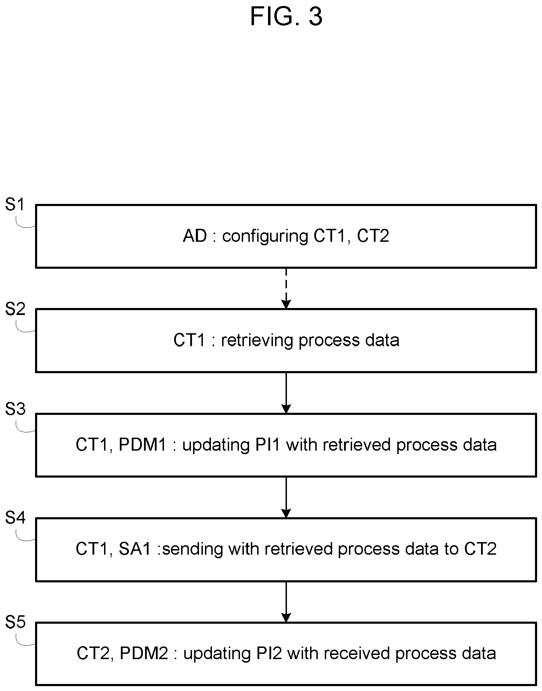

With reference to FIG. 3, a method for sharing a process image by a controller according to one embodiment of the invention comprises steps S1 to S5.

In an initial step S1, the application device AD may design the distributed automation application Daa independently of the hardware platform, i.e. the controllers, and may configure the network topology for communication between controllers CT1, CT2 on the second communication line CL2. The IO system including the communication devices is also configured to be compliant with the protocols used on the first communication line CL1.

Furthermore, the application device AD may map the process image of each controller to the needs of the distributed automation application Daa. The application device AD may also configure the owner strategy for the inputs and outputs of I/O modules for each controller, i.e. determine which controller may access the inputs and outputs of communication devices of other controller.

Finally, the application device AD deploys the distributed automation application Daa in the different controllers, here the first controller CT1 and the second controller CT2.

In step S2, the first controller CT1 retrieves new process data, from the distributed automation application Daa or from a communication device CD1of the first set of I communication devices CD1. The new process data can be retrieved from a communication device CD1periodically or based on events.

If the process data are input data from a communication device CD1, they are read by the first process data manager PDM from the first communication line CL1. If the process data are output data for a communication device CD1, they are written by the first process data manager PDM1 from the distributed automation application Daa.

In step S3, the first process data manager PDM1 updates the first process image PI1 with the retrieved process data. The part of the first process image updated with the retrieved process data forms a common IO process image to be shared between controllers. Once the process data have been updated, the first process data manager PDM1 notifies the first synchronization agent SA1 with the updated process data.

In step S4, the first synchronization agent SA1 sends the process data on the second communication line CL2. In one embodiment, the process data are published by the publisher service of the first synchronization agent SA1.

In step S5, at least the second controller CT2 receives the process data sent on the second communication line CL2. In one embodiment, the process data are received through the subscriber service of the second synchronization agent SA2. Thus, only controllers in the industrial system, like second controller CT2, having subscribed to data published by the first controller CT1 can receive the process data sent by the first process data manager PDM1 on the second communication line CL2.

The second process data manager PDM2 updates the second process image PI2 with the received process data. The part of the second process image updated with the received process data forms a common IO process image that is shared between controllers.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments

## Claims

1. A method for sharing process data from a first controller (CT1) to a least a second controller (CT2), the first controller (CT1) and the second controller (CT2) including respectively a first runtime environment (RE1) and a second runtime environment (RE2) to execute at least a distributed automation application (Daa) and including respectively a first process data manager (PDM1) and a second process data manager (PDM2) to manage respectively a first process image (PI1) and a second process image (PI2), the first process data manager and the second process data manager being linked respectively to a first set of communication devices (CD1) and to a second set of communication devices (CD2) via a first communication line (CL1) and being linked between them via a second communication line (CL2), the method comprising the following steps:
the first controller (CT1) retrieving (S2) process data from the distributed automation application (Daa) or from a communication device of the first set of communication devices (CD1),
the first controller (CT1) updating (S3) the first process image (PI1) with the retrieved process data,
the first controller (CT1) sending (S4) the process data on the second communication line (CL2),
the second controller (CT2) receiving (S5) the process data sent on the second communication line (CL2) and updating the second process image (PI2) with the received process data.

2. A method according to claim 1, wherein the second communication line (CL2) provides deterministic data paths with high reliability and bounds on latency.

3. A method according to any of previous claims, wherein the process data are input data from a communication device of the first set of communication devices (CD1) and are read by the first process data manager (PDM1) from the first communication line (CL1).

4. A method according to any of previous claims, wherein the process data are output data for a communication device of the first set of communication devices (CD1) and are written by the first process data manager (PDM1) from the distributed automation application (Daa).

5. A method according to any of previous claims, wherein the process data are published by a publisher service of a first synchronization agent (SA1) implemented in the first process data manager (PDM1) on the second communication line (CL2).

6. A method according to any of previous claims, wherein the process data are received through a subscriber service of a second synchronization agent (SA2) implemented in the second process data manager (PDM2).

7. A method according to any of previous claims, wherein the first communication line (CL1) and the second communication line (CL2) are merged.

8. An industrial system comprising a first controller (CT1) and a least a second controller (CT2) for sharing process data from the first controller (CT1) to a least the second controller (CT2), the first controller (CT1) and the second controller (CT2) including respectively a first runtime environment (RE1) and a second runtime environment (RE2) to execute at least a distributed automation application (Daa) and including respectively a first process data manager (PDM1) and a second process data manager (PDM2) to manage respectively a first process image (PI1) and a second process image (PI2), the first process data manager and the second process data manager being linked respectively to a first set of communication devices (CD1) and to a second set of communication devices (CD2) via a first communication line (CL1) and being linked between them via a second communication line (CL2), wherein:
the first controller (CT1) is configured to retrieve process data from the distributed automation application (Daa) or from a communication device of the first set of communication devices (CD1),
the first controller (CT1) is configured to update the first process image (PI1) with the retrieved process data,
the first controller (CT1) is configured to send the process data on the second communication line (CL2),
the second controller (CT2) is configured to receive the process data sent on the second communication line (CL2) and to update the second process image (PI2) with the received process data.

9. A computer-readable medium having embodied thereon a computer program for executing a method for sharing process data from a first controller (CT1) to a least a second controller (CT2) according to any of claims 1 to 7.
